Europäisches Patentamt

European Patent Office

Office européen des brevets

(19)

(11) Publication number: **0 011 951**
**B1**

# (12) EUROPEAN PATENT SPECIFICATION

(45) Date of publication of patent specification: **27.07.83**

(21) Application number: **79302482.9**

(22) Date of filing: **06.11.79**

(51) Int. Cl.³: **C 08 B 37/00,**
**D 06 M 15/02**

(54) Cold-water soluble tamarind gum, process for its preparation and its application in sizing textile warp.

(30) Priority: **09.11.78 US 959120**

(43) Date of publication of application:
**11.06.80 Bulletin 80/12**

(45) Publication of the grant of the patent:
**27.07.83 Bulletin 83/30**

(84) Designated Contracting States:
**DE FR GB IT NL**

(56) References cited:
COLOURAGE, 16th February 1978, Pages 24—27
H.C. SRIVASTAVA: "Low viscosity tamarind
kernel powder-nature and properties"

ROY L. WHISTLER: "Industrial Gums" Second
Edition 1973, Academic Press New York, U.S.A.,
pages 327—379

CHEMICAL ABSTRACTS, vol, 48, no. 6, 25th
March 1954, column 3702d Columbus, Ohio.
U.S.A.

(73) Proprietor: **MERCK & CO. INC.**
126, East Lincoln Avenue P.O. Box 2000
Rahway New Jersey 07065 (US)

(72) Inventor: **Racciato, Joseph S.**
4522 Acoma Avenue
San Diego, California 92117 (US)

(74) Representative: **Crampton, Keith John Allen et al,**
D YOUNG & CO 10 Staple Inn
London WC1V 7RD (GB)

(56) References cited:
CHEMICAL ABSTRACTS, vol 53, no. 16,
colummn 15577c Columbus, Ohio, U.S.A S.G
BHAT: "Tamarind seeds: I. Gray yarn sizing with
tamarind kernel powder"

Cold-water soluble tamarind gum, process for its preparation and its application in sizing textile warp

This invention relates to tamarind kernel powder (TKP).

TKP is defined herein as tamarind kernel powder obtained from the seed kernels of the tree, *Tamarindus indica (Linn)*, resulting from husking and milling of these seed kernels. TKP includes all of the constituents found in the tamarind seed kernel: polysaccharide (composed of uronic acid and the neutral sugars arabinose, cylose, mannose, glucose, and galactose), protein, and any other cellular debris from the tamarind kernel seed. This TKP is crude and insoluble in cold water (in the range of 5—35°C). TKP is dispersed in water and a solution obtained by boiling in most TKP applications where a purified product is not necessary such as in warp sizing, latex rubber, adhesives, and in the paper and plywood industries.

There exist in the art several purification methods for making a cold-water soluble product from TKP. U.S. 3,287,350 teaches the art of purifying TKP to obtain tamarind seed jellose (TSJ), the polysaccharide constituent of TKP. The process specifies bleaching of the coarsely ground tamarind seed kernels, which are then dispersed in a 25-fold amount of water. After injection of steam, the solution is filtered and the TSJ precipitated by using a sulfate and alcohol. U.S. 3,399,189 teaches the art of making a cold-water soluble product from TKP by extracting the polysaccharide from the tamarind seed kernels with isopropanol at ~80°C, the polysaccharide then being dispersed in a 25- to 35-fold amount of water. Injection of steam and sub-sequent filtration yield a cold-water-soluble product which is recovered from solution by roll drying or precipitation with an organic solvent.

A process has now been found for producing a novel composition from unpurified tamarind kernel powder which is soluble in cold water. This novel product can be used for the same purposes as TKP.

The prior art processes for preparing a cold-water-soluble tamarind product are based on separation (via precipitation and/or filtration) of the polysaccharide from the other constituents contained in TKP. The present invention teaches the art of preparing cold-water-soluble tamarind gum (CWSTG) by a method which does not require purification. This product is similar in appearance and physical properties to TKP; however, its cold-water solubility is unexpected in view of the previously described TKP cold-water-solubilization methods from which it may be inferred that the constituents of TKP other than the polysaccharide contribute to TKP's cold-water insolubility and must be removed in order to obtain a cold-water-soluble tamarind product. The present invention, via its cold-water-solubilization process, produces a dry, crude TKP produce containing all of the TKP constituents and exhibiting cold-water solubility.

It is understood by those in the art that TKP is a commercially available crude product which has trace impurities which vary from shipment to shipment. These impurities comprise metal shavings, wood pulp, cellulose from tamarind seed husks, and other plant parts and inorganic impurties. Many of these impurities are inherently insoluble in water and are excluded from the scope of this invention.

In accordance with the present invention, CWSTG is made by mixing TKP in water at concentrations of 0.1 to 75%, heating this mix to a temperature of 35—130°C, until the tamarind gum dissolves and then drying (and optionally milling) the resulting CWSTG. The heating and drying steps can be combined, as in the drum drying process. The milling step is preferred so as to produce minute particles which readily hydrolyze. Impurities are not removed during the process of the invention.

TKP subjected to this process exhibits cold-water solubility. As indicated, this process does not require the addition of bleaching agents, or any precipitation and/or filtration stesps to yield CWSTG. The process conserves time of preparation, reduces reagent costs, and give yields of approximately 100%. The constraints inherent in said process are governed by temperature, time, and pressure relationships; i.e., at lower temperatures, longer periods of time are required to develop full solubility.

CWSTG can be defined in terms of the viscosity of a solution prepared with cold water (i.e., 5—35°C). A CWSTG aqueous solution prepared by adding CWSTG powder to cold water and mixing under moderate shear (e.g., Lightnin Mixer at 800—1,000 rpm) for one hour develops a viscosity of greater than 10 mPas (Brookfield LVF viscometer, spindle 1, 60 rpm) at a 1% concentration and greater than 1,000 mPas (Brookfield LVF viscometer, spindle 3, 60 rpm) at 10% concentration.

Heating of the TKP-water mix can be accomplished by various methods, including, but not limited to, infra-red irradiation, conventional steam heating, drum drying, and microwave heating. The temperature range necessary to achieve cold-water solubility is from 35°C to just below degradation temperature TKP; preferably 35—130°C. TKP held at lower temperatures requires a longer time for viscosity to develop and does not develop at the same viscosity at TKP held at higher temperatures. The optimum temperature range is 70—100°C at atmospheric pressure.

It is preferred that the TKP concentration range from 4% to 60%. A still more preferred range is 20% to 50%.

In addition the obvious convenience of use, CWSTG represents a substantial energy saving when compared to the standard method of using TKP. In final applications, use levels of TKP and CWSTG are below 10%. The optimum treatment range for preparing CWSTG is as high as 50%. So the total energy needed to heat the water for a <10% final solution of TKP vs CWSTG is at least five time higher for TKP. Also, since many of the final end uses for TKP and CWSTG require cold rather than hot water, a further savings is made since with CWSTG there is no hot solution which has to be cooled down to end-use temperatures.

An application which utilizes the cold-water solubility of CWSTG is the warp sizing of textile fibers. In this application, CWSTG is made up into a solution fo 3—7% solids and applied to the yarn to give an add-on level of approximately 6% based on the weight of the fibre. If either the nature of the processing or the yarn itself requires a more plastic, or flexible, warp-size film, commonly used plasticizers such as glycerin can be added to the CWSTG size to produce the desired plastic level. Following the weaving operation the size can then be easily removed in a cold-water scour containing 2 g/l sodium carbonate and 1 g/l of a surfactant such as TERGITOL® 15—S—9. ·

The following examples, which are not intended to be limiting, further illustrate the processes of the invention and the novel dry composition, cold-water soluble tamarind gum.

In the examples all viscosity measurements are at room temperature.

EXAMPLE 1

TKP is dispersed in water to a concentration of 20%, heated to 95°C for 10 minutes, then dried and milled. The resulting product is dissolved in water at 20°C and develops a viscosity of 35 mPas at 1% concentration, measured on a Brookfield LVF viscometer, spindle 1, 60 rpm.

EXAMPLE 2

TKP is dispersed in water at ambient temperature at a concentration of 40%. The resulting paste is drum dried (dissolution of the dispersed materials takes place during the drum drying stage) with internal steam pressure at 2.74 bar, and then milled. The resulting produce readily dissolves in ambient-temperature water and imparts a viscosity of 30 mPas at 1% concentration, measured on a Brookfield LVF viscometer, spindle 1, 60 rpm.

EXAMPLE 3
*Comparisons of TKP vs CWSTG*

A 3% dispersion of TKP is made up by dispersing the TKP in water at room temperature. A solution of CWSTG as prepared in Example 1 is also made up as a 3% solution at room temperature. The viscosities of the dispersion and the solution are measured after 15 minutes of mixing at 1200 rpm on a Lightnin Mixer. The viscosity of the TKP is less than 2 mPas as measured on a Brookfield LVF viscometer, spindle 1, 60 rpm, compared with the viscosity of the CWSTG which is 400 mPas as measured on the Brookfield LVF viscometer, spindle 3, 60 rpm.

The respective viscosities are remeasured after 4 hours of mixing. The TKP imparts a viscosity of 10 mPas whereas the CWSTG imparts a viscosity of 1,100 mPas. These viscosities remain unchanged after 24 and 48 hours.

EXAMPLE 4

TKP is processed according to the purification process detailed in U.S. 3,399,189 and compared to CWSTG as prepared by Example 2. Compositional analysis shows the following differences between the two gums:

| | % Protein | % Uronic Acid | % Molar Ratios NEUTRAL SUGARS | | | | |
| --- | --- | --- | --- | --- | --- | --- | --- |
| | | | Arabinose | Xylose | Mannose | Glucose | Galactose |
| CWSTG | 15.0 | 7.5 | 7.0 | 31.0 | trace | 48.0 | 14.0 |
| Processed TKP | 7.0 | 9.0 | 5.0 | 36.0 | — | 45.0 | 14.0 |

®TERGITOL is a registered trademark of Union Carbide Corp.

## Claims

1. A cold-water-soluble dry form of crude tamarind kernel powder which, when hydrated at 5—35°C, imparts a viscosity of greater than 10 mPas (Brooffield LVF, spindle 1, 60 rpm) in a 1% solution, and a viscosity of greater than 1,000 mPas (Brookfield LVF, spindle 3, 60 rpm) in a 10% solution, and that is obtained by mixing tamarind kernel powder without water at a concentration by weight of 0.1 to 75% without removing any impurities; heating the water to 35—130°C until the tamarind gum dissolves; and evaporating the resultant solution to dryness.

2. A process for preparing a cold-water-soluble dry form of crude tamarind kernel powder that comprises (a) mixing TKP in water at a concentration by weight of 0.1 to 75%; (b) heating the water to 35—130°C until the tamarind gum dissolves; and (c) evaporating the resultant solution to dryness, characterised in that impurities are not removed from the gum during the process.

3. A process as claimed in Claim 2 in which the TKP concentration in step (a) is 20—50% by weight and the water in step (b) is heated to 70—100°C.

4. A process as claimed in Claim 2 or 3 in which the heating and drying steps (b) and (c) are combined in a single operation.

5. A process as claimed in any one of Claims 2 or 4 including the additional step of (d) milling the product of step (c).

6. A cold-water-soluble warp size comprising a 3—7% concentration in water of a cold-water-soluble dry form of crude tamarind kernel powder as claimed in Claim 1.

7. A process for the sizing of textile warp, characterised in that a 3—7% aqueous solution of a cold-water-soluble dry form of crude tamarind kernel powder as claimed in Claim 1 is used.

## Revendications

1. Forme sèche soluble dans l'eau froide de poudre de graine de tamarinier brute qui, lorsqu'elle est hydratée à 5—35°C, confère une viscosité supérieure à 10 mPas (Brookfield LVF, arbre 1, 60 tpm) à une solution à 1%, et une viscosité supérieure à 1000 mPas (Brookfield LVF, arbre 3, 60 tpm) à une solution à 10%, et que l'on obtient en mélangeant de la poudre de graine de tamarinier avec de l'eau à une concentration pondérale de 0,1 à 75% sans enlever aucune impureté; en chauffant l'eau à 35—130°C jusqu'à ce que la gomme de tamarinier se dissolve; et un faisant évaporer jusqu'à siccité la solution obtenue.

2. Procédé de préparation d'une forme soluble dans l'eau froide de poudre de graine de tamarinier brute dans lequel (a) on mélange la PGT dans l'eau à une concentration pondérale de 0,1 à 75%; (b) chauffe l'eau à 35—130°C jusqu'à ce que la gomme de tamarinier se dissolve; et (c) on fait évaporer jusqu'à siccité la solution obtenue, caractérisé en ce que les impuretés ne sont pas retirée de la gomme au cours du procédé.

3. Procédé selon la revendication 2 our la concentration de PGT dans l'étape (a) est de 20 à 50% en poids et où l'eau dans l'étape (b) est chauffée à 70—100°C.

4. Procédé selon l'une des revendications 2 ou 3 où chauffage et le séchage des étapes (b) et (c) sont combinés en une seule opération.

5. Procédé selon l'une quelconque des revendications 2 à 4 comprenant l'ètape supplémentaire consistant à (d) moudre le produit de l'étape (c).

6. Apprêt pour chaîne soluble dans l'eau froide comprenant une concentration à 3 à 7% dans l'eau d'une forme sèche soluble dans l'eau froide de la poudre de graine tamarinier brute selon la revendication 1.

7. Procédé d'apprêt d'une chaîne textile caractérisé en ce qu'on utilise une solution aqueuse à 3 à 7% d'une forme sèche soluble dans l'eau froide de poudre de graine de tamarinier brute selon la revendication 1.

## Patentansprüche

1. In kaltem Wasser lösliche, trockene Form von rohem Tamarindenkernpulver, das bei Hydratation bei 5 bis 35°C in einer 1-prozentigen Lösung eine Viskosität von mehr als 10 mPas (Brookfield LVF, Spindel 1, 60 U/min) und in einer 10-prozentigen Lösung eine Viskosität von mehr als 100 mPas (Brookfield LVF, Spindel 3, 60 U/min) bewirkt und erhalten worden ist durch Vermischen von Tamarindenkernpulver mit Wasser in einer Konzentration von 0,1 bis 75 Gewichtsprozent ohne Entfernung von Verunreinigungen, Erwärmen des Wassers auf 35 bis 130°C, bis das Tamarinden-Gummi in Lösung geht, unter Eindampfen der erhaltenen Lösung zur Trockne.

2. Verfahren zur Herstellung einer in kaltem Wasser löslichen, trockenen Form von rohem Tamarindenkernpulver (TKP) durch (a) Vermishen von TKP mit Wasser in einer Konzentration von 0,1 bis 75 Gewichtsprozent, (b) Erwärmen des Wassers auf 35 bis 130°C, bis das Tamarinden-gummi in Lösung geht, und (c) Eindampfen der erhaltenen Lösung zur Trockne, dadurch gekennzeichnet, dass während des Verfahrens Verunreinigungen nicht aus dem Gummi entfernt werden.

3. Verfahren nach Anspruch 2, dadurch gekennzeichnet, dass die TKP-Konzentration in Stufe (a) 20 bis 50 Gewichtsprozent beträgt und das Wasser in Stufe (b) auf 70 bis 100°C erwärmt wird.

4. Verfahren nach Anspruch 2 oder 3, dadurch gekennzeichnet, dass die Erwärmungs- und Trocknungsstufen (b) und (c) zu einem einzigen Verfahrensschritt kombiniert werden.

5. Verfahren nach einem der Ansprüche 2 bis 4, dadurch gekennzeichnet, dass man in einer zusätzlichen Stufe das produkt von (c) mahlt.

6. In kaltem Wasser lösliche Schlichte für textile Zwecke, enthaltend eine in kaltem Wasser lösliche, trockene Form von rohem Tamarindenkernpulver nach Anspruch 1 in einer Konzentration von 3 bis 7 Prozent in Wasser.

7. Verfahren zum Schlichten von textilen Werkstoffen, dadurch gekennzeichnet, dass man einer 3- bis 7-prozentige wässrige Lösung einer in kaltem Wasser löslichen, trockenen Form von rohem Tamarindenkernpulver nach Anspruch 1 verwedet.